Europäisches Patentamt

European Patent Office

Office européen des brevets

(19)

(11) Numéro de publication : **0 489 890 B1**

(12) **FASCICULE DE BREVET EUROPEEN**

(45) Date de publication du fascicule du brevet :
23.08.95 Bulletin 95/34

(51) Int. Cl.⁶ : **H04N 7/00**

(21) Numéro de dépôt : **91912186.3**

(22) Date de dépôt : **25.06.91**

(86) Numéro de dépôt international :
**PCT/FR91/00505**

(87) Numéro de publication internationale :
**WO 92/00651 09.01.92 Gazette 92/02**

(54) **PROCEDE DE CODAGE A PARAMETRES AJUSTABLES D'UN CHAMP DE MOUVEMENT DANS UNE SEQUENCE D'IMAGES ANIMEES.**

(30) Priorité : **29.06.90 FR 9008299**

(43) Date de publication de la demande :
**17.06.92 Bulletin 92/25**

(45) Mention de la délivrance du brevet :
**23.08.95 Bulletin 95/34**

(84) Etats contractants désignés :
**AT BE CH DE DK ES FR GB GR IT LI LU NL SE**

(56) Documents cités :
**EP-A- 0 342 756**
**EP-A- 0 349 454**
**US-A- 4 922 341**
**FREQUENZ, vol. 43, nos. 3,4, mars-avril 1989, M. GILGE et al.: "Codierung von farbigen Bewegtbildszenen mit 64 kbit/s - ein neuer Ansatz zur Verwirklichung eines Bildtelefons im ISDN (Teil I + Teil II)"**

(56) Documents cités :
**2ND INTERNATIONAL WORKSHOP ON SIGNAL PROCESSING OF HDTV, L'Aquila, 29 février - 2 mars 1988, J.P. HENOT: "Coding of motion information for high definition television"**
**4TH INTERNATIONAL COLLOQUIUM ON ADVANCED TELEVISION SYSTEMS, Ottawa, 25-29 juin 1990, G.M.X. FERNANDO et al.: "Display processing for HD-MAC"**

(73) Titulaire : **THOMSON-CSF**
**173, Boulevard Haussmann**
**F-75008 Paris (FR)**

(72) Inventeur : **GUILLOTEL, Philippe**
**7, rue du Père-Grignion**
**F-35000 Rennes (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

EP 0 489 890 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé de codage à paramètres ajustables d'un champ de mouvement dans une séquence d'images animées.

L'analyse du mouvement dans une séquence d'images animées, notamment en télévision, est une opération qui est fondamentalement importante dans la chaîne des opérations effectuées pour traiter les images.

Les méthodes d'estimation hiérarchiques connues telles que décrites par exemple dans la demande de brevet français n° 89 11328 déposée au nom de la Demanderesse apparaissent jusqu'à présent les plus efficaces, et les mieux adaptées au fait que le champ de mouvement d'une image peut être considéré comme l'assemblage de zones d'images à déplacement constant. Ces méthodes présentent aussi l'avantage qu'elles permettent d'obtenir un déplacement constant sur des zones homogènes de l'image ou de trouver le déplacement correspondant aux grandes zones en mouvement (panoramique ...) mais aussi d'avoir une bonne précision notamment sur les frontières des zones en mouvement et dans les zones à mouvements variés.

Cependant le problème qui se pose est de pouvoir coder le champ de vecteurs obtenus de façon à obtenir un débit aussi faible que possible. Le problème a été jusqu'à présent résolu en différenciant d'une part, le codage d'un champ de mouvement comme partie du codage d'image, et d'autre part, le codage spécifique d'un champ de mouvement pour des applications précises de télévision notamment.

Des exemples de codage de champ de mouvement comme partie du codage d'image ont déjà fait l'objet des publications suivantes intitulées :

"Variable block-size image coding" J.Jacques VAISEY and Allen GERSHO IEEE - 1987

"Video codec for audiovisual services AT px64 Kbits" Draft revision of recommendation H.261 - 30 march 1990

et

"Motion vector coding with conditional transmission" WOO YOUNG CHOI and RAE-HONG PARK - Signal processing vol. 18 n°3 - nov. 89 pages 259-267

Des exemples de codage de champs de mouvement pour des applications plus spécifiques comme la télévision peuvent être trouvés dans les articles intitulés :

"HDMAC coding for MAC compatible Broadcasting of HDTV signals" F.W.P. VREESWIJK and Dr. M.R. HAGHIRI - 3rd International workshop or HDTV - 30th August 1989 - Torino

et

"Coding of motion information on signal processing of HDTV" J.P. HENOT - 2rd International workshop on signal processing of HDTV - 29 february-2 march 1988 - L'Aquila.

Dans le premier cas, un codage des vecteurs mouvements ne représentait que de l'ordre de 10% du débit numérique total. Dans ces conditions, il ne nécessite pas, de ce fait, de développement spécifique. Les procédés utilisés sont alors les mêmes que pour le codage d'image et consistent à effectuer un codage à longueur variable adapté à des méthodes différentielles par rapport aux voisins du point courant ou par rapport à la moyenne du voisinage, ou encore adapté à des méthodes par entropie, cette dernière nécessitant le calcul d'un histogramme. Certaines solutions utilisent d'autre part, en plus une décomposition par un arbre de codage pour regrouper les zones homogènes de l'image.

Dans ces différentes applications le coût binaire du champ de mouvement n'est pas la contrainte principale. Cependant les contraintes rencontrées en télévision haute définition ont nécessité de développer des méthodes de codage spécifiques pour les informations de déplacement. L'article de M. J.P. Henot précité utilise un codage pour utiliser la corrélation spatiale qui existe dans une image, l'article de MM. VREESWIJK et HAGHIRI décrit une utilisation d'un adressage relatif des vecteurs d'une image sur la précédente pour utiliser la corrélation temporelle.

Malgré tout ces méthodes ne permettent pas de réguler le débit de transmission, ou même parfois, d'obtenir un débit inférieur à 1 Mbit/s avec une qualité d'image qui reste acceptable.

Le but de l'invention est de pallier les inconvénients précités.

A cet effet, l'invention a pour objet un procédé de codage à paramètres ajustables d'un champ de mouvement dans une séquence d'images animées caractérisé en ce qu'il consiste à décomposer chaque champ de mouvement de l'image suivant un arbre de codage réalisé par des étapes successives de découpage de l'image en blocs de dimension déterminée, chaque bloc d'image obtenu étant à nouveau découpé jusqu'à l'obtention d'un bloc homogène, c'est à dire une zone d'image à mouvement uniforme et à identifier, à partir d'un menu de vecteurs $(Vect_i)$ contenant la valeur des vecteurs mouvement $(Vect_i)$ présents dans l'image et de mots de code $(MC_i)$ donnant l'adresse de ces vecteurs dans les menus, les vecteurs $(Vect_i)$ correspondant à ces zones homogènes.

Par le fait qu'il met en oeuvre un menu de vecteurs le procédé selon l'invention a pour avantage qu'il offre la possibilité de réguler le débit, d'effectuer un codage par arbre de codage spatial et temporel en prenant en compte le mouvement sur 2 images consécutives. Il offre aussi la possibilité d'avoir des mots de code de longueur variable en fonction du nombre de vecteur par macrobloc, de limiter l'information à coder en supprimant les vecteurs les moins occurents au lieu d'analyser spatialement les informations, il permet d'avoir une borne maximale pour le débit, et enfin il permet de coder l'arbre comme un "vecteur" spécifique ou de coder l'arbre séparément.

Le procédé selon l'invention a également pour avantage de pouvoir être utilisé sur tout dispositif de traitement d'images qui nécessite une réduction de débit d'information. Il peut s'appliquer notamment au codage de champs de mouvement en télévision haute définition, au codage d'image comme au codage numérique des signaux d'assistance de télévision du système de télévision connu sous la désignation HDMAC. Il permet à l'utilisateur de choisir suivant ses contraintes les paramètres du codage qui lui donneront le meilleur compromis débit-qualité, et ce de façon dynamique (c'est-à-dire différemment suivant les images et en fonction du débit ou de la qualité obtenus) ou statique (c'est-à-dire une fois pour toutes, au départ).

D'autres caractéristiques et avantages de l'invention apparaîtront ci-après à l'aide de la description qui suit faite en regard des dessins annexés qui représentent :

- Les figures 1A, 1B, 1C un procédé de décomposition d'images en blocs auquel est associé un arbre de décomposition pour le codage des blocs.
- La figure 2 une composition des champs de mouvement à transmettre après application de la décomposition en arbre de codage des figures 1A, 1B et 1C.
- La figure 3 une composition des mots de codes à transmettre lorsque le nombre de feuilles ajoutées au nombre de noeuds est supérieur à la taille de l'image à transmettre.
- La figure 4 un mode d'assemblage du menu de vecteurs à transmettre en effectuant une décomposition en arbre de codage sur deux images successives.
- La figure 5 une composition des champs de mouvement à transmettre après application de la décomposition en arbre de codage des figures 1A, 1B et 1C pour le cas où l'arbre est codé séparément par les vecteurs.

Pour pouvoir coder un champ de vecteurs mouvement de façon à obtenir pour la transmission des images un débit de mots de code aussi faible que possible, l'idée de l'invention est de regrouper ces informations afin d'obtenir un champ de vecteurs avec des blocs aussi grands que possible correspondant aux zones homogènes de l'image. Cela revient à déterminer un arbre de codage défini par les zones homogènes de l'image et à lier ce codage au codage d'un champ de mouvement en tenant compte de paramètres variables pour obtenir un bon compromis résolution-débit.

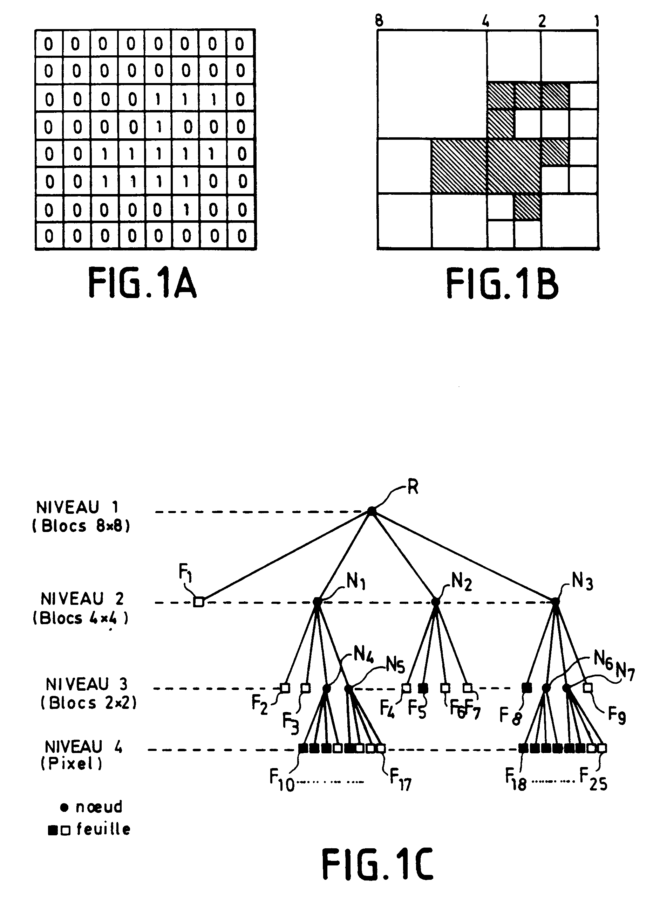

La décomposition en arbre de codage consiste, comme le montre les figures 1A, 1B et 1C, à découper une image en blocs homogènes de taille nxn les plus grands possibles, puis à associer au découpage obtenu un arbre (figure 1C) dont la racine R représente l'image, les noeuds ($N_1$ à $N_7$), les blocs de taille 2nx2n, non homogènes qui sont décomposés en quatre sous blocs de taille nxn et les feuilles $F_1$ à $F_{25}$ des blocs nxn homogènes. On obtient ainsi dans le cas de l'exemple représenté aux figures 1A, 1B, et 1C, 4 niveaux de codes, un premier niveau (niveau 1) correspond à un bloc de taille 8x8 pixels formant la racine, un deuxième niveau (niveau 2) fait apparaître 4 blocs de taille 4x4 pixels, un troisième niveau (niveau 3) est composé de 9 blocs de 2x2 pixels et le quatrième niveau (niveau 4) est composé des pixels restants.

Ainsi au lieu d'avoir une information pour chaque bloc élémentaire ou pixel, le procédé selon l'invention permet d'obtenir une découpe en zones où l'information à coder est identique (représentée par les feuilles).

Dans le cas du codage d'un champ de mouvement l'information à coder est la valeur du vecteur déplacement obtenu à laquelle s'ajoute un codage des noeuds nécessaires à la construction de l'arbre au décodage sous la forme d'un "vecteur" spécifique.

Dans l'hypothèse où le codage est limité à des vecteurs d'amplitude nominale ±V dans les directions horizontale et verticale de l'image, le nombre de combinaisons possibles est alors de $(2V+1)^2$ et le nombre de bits nécessaires au codage est égal à

$$\log_2 [(2V+1)^2]$$

A titre d'exemple, pour un vecteur d'amplitude ±6 pixels (V = 6), le nombre de combinaisons est de 13 x 13 = 169 + 1(noeud) = 170 et le nombre de bits par mot de code est alors égal à 8.

Cependant, comme dans une image tous les vecteurs possibles ne sont pas forcément présents, une des caractéristiques de l'invention est de réaliser un menu de vecteurs contenant tous les vecteurs présents dans l'image. Dans ces conditions l'information à coder n'est plus la valeur du vecteur, mais un adressage relatif dans le menu.

Ainsi en reprenant l'exemple précédent et en supposant que seulement 45 vecteurs différents sont présents sur les 169 possibles. Le nombre de combinaisons se réduit à 45 + 1 = 46 et le nombre de bits par mot de code se réduit à 6.

Mais ceci oblige à transmettre les vecteurs de menu accompagnés de leurs mots de code comme le mon-

3

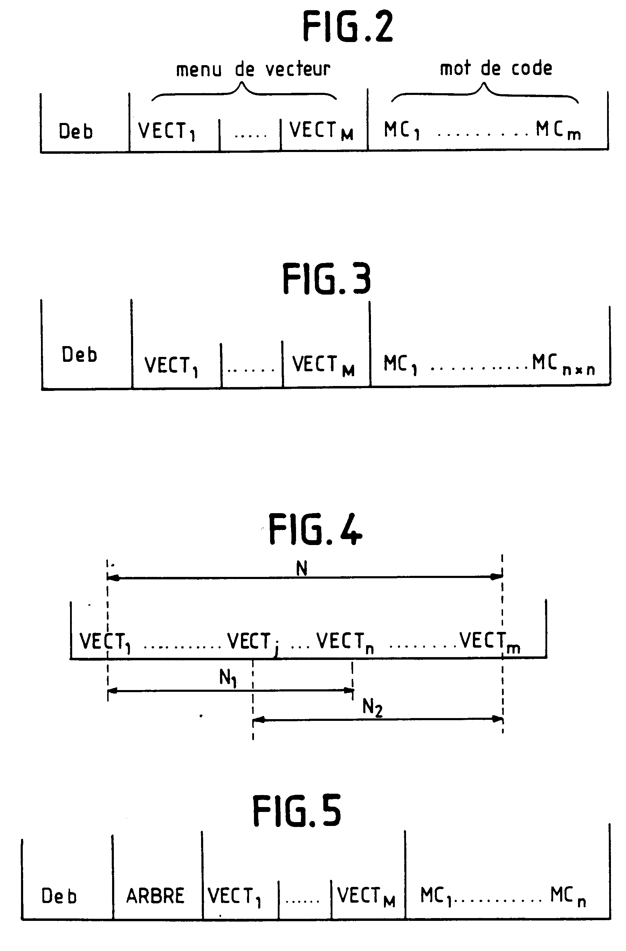

tre la configuration de la figure 2. Sur cette figure le champ Deb représente un mot de début contenant le nombre de vecteur (n) et le nombre de mot de code (nombre de feuille et de noeud = m). Les champs $Vect_i$ représentent les vecteurs présents dans l'image et les champs $MC_i$ représentent les mots de code représentant soit un noeud, soit le numéro d'un vecteur du menu.

Cependant si la décomposition précédente des vecteurs mouvement en arbre de codage, tire avantage de la forte corrélation spatiale bidimensionnelle existante entre les vecteurs mouvement, elle ne tient pas compte de la corrélation temporelle qui existe d'une image à l'autre et qui à coup sûr peut permettre de réduire le débit. Ce problème est résolu par l'invention par une décomposition en arbre de codage qui est faite non plus sur une image mais sur deux images successives et qui conduit à n'utiliser qu'un seul arbre pour deux images. Un bloc homogène doit dans ces conditions l'être spatialement sur deux images consécutives avec le même vecteur. Le nombre de vecteurs du menu est alors égal au nombre de vecteurs différents de l'image courante et de l'image précédente ou suivante et le nombre de combinaisons est égal au nombre de vecteurs différents de l'image courante multiplié par le nombre de vecteurs différents de l'images précédente ou suivante.

Cependant, lorsque pour une image de taille nxn le nombre de feuilles ajoutées au nombre de noeuds devient supérieur au produit nxn, le codage au moyen de la décomposition en arbre n'a alors plus d'intérêt et dans ce cas les mots de code sont transmis directement suivant l'organisation de la figure 3, où les mots de codes $MC_i$ ne se rapportent qu'à l'indice du vecteur correspondant dans le menu, aucun noeud n'étant pris en considération et il y a autant de $MC_i$ que de pixels dans l'image. Naturellement ce cas de figure correspond à un débit maximum.

Dans le cas où la décomposition est effectuée sur 2 images consécutives le champ DEB contient le nombre $N_1$ de vecteurs de l'image courante, le nombre $N_2$ de vecteurs de l'image précédente (ou suivante), le nombre de vecteurs différents (N) dans l'image courante et dans l'image précédente (ou suivante) et le nombre de mots de codes MC. Le menu des vecteurs $VECT_1$ ... $VECT_n$ est alors transmis de la façon représentée à la figure 4 en tenant compte des vecteurs semblables dans les vecteurs $N_1$ et $N_2$ qu'il n'est pas utile de transmettre deux fois dans le menu.

Comme dans les applications nécessitant un codage, le débit maximal admissible est en général fixé, le procédé selon l'invention a pour avantage qu'il permet le codage de n'importe quel champ de mouvement quelque soit le débit fixé. Cependant comme il existe une dégradation de qualité lorsque les débits fixés sont de plus en plus faibles, un bon compromis entre débi et qualité peut être obtenu en adaptant la taille des blocs. Par exemple, au lieu de descendre dans la décomposition de l'arbre de codage jusqu'au pixel il est toujours possible de s'arrêter à une taille de blocs de 2x2 ou 4x4 ... etc, avec un vecteur associé à chaque taille élémentaire, le débit dans ces conditions devient plus faible. Il est aussi possible de régler l'amplitude des vecteurs. Dans ce cas le débit peut être réduit très sensiblement et seul le menu des vecteurs est à modifier du fait de l'adressage relatif. Une autre méthode de réduction du débit peut aussi consister à limiter le nombre de vecteurs par image et par conséquent le nombre de bits par mot de code mais cependant ce procédé revient à interdire certains vecteurs dans l'image. Toutefois en découpant l'image en macroblocs de taille par exemple égale à ¼ d'image et en calculant un arbre sur chacun de ces blocs de manière à obtenir plusieurs menus par image, le nombre de vecteurs peut être réduit dans chaque macro-bloc tout en conservant pour toute l'image la possibilité d'avoir tous les vecteurs possibles.

Pour éviter des dégradations importantes du champ de mouvement il est important de réaliser un compromis entre la taille des macroblocs et le nombre de vecteurs maximal autorisé à l'intérieur de ces blocs. Ces paramètres sont déterminables à l'initialisation du procédé et peuvent naturellement aussi être modifiés en cours de transmission pour assurer une transmission à débit constant. Dans ce dernier cas le codage du champ de mouvement peut avoir lieu dans un premier temps sans restriction et peut ensuite être modifié seulement lorsque le débit optimum est dépassé par action sur certains paramètres pour rester dans le débit maximal fixé.

Le procédé selon l'invention est avantageusement applicable au codage des images de télévision du standard HDMAC. Dans ce cas en effet le codage a lieu sur la base de blocs 16x16 pixels toutes les 40 ms en considérant chaque fois deux trames entrelacées. Dans ce type de codage, chaque bloc est défini suivant trois modes, un mode 80 ms pour les blocs fixes pour lesquels le mouvement est nul, un mode 40 ms pour les blocs en mouvement d'amplitude inférieure à 6 pixels et un mode 20 ms pour les blocs en mouvement supérieur à ± 6 pixels. Seul le mode 40 ms qui utilise des vecteurs déplacements est compensé en mouvement et sur 80 ms correspondant à la durée de deux images entrelacées seules les combinaisons suivantes sont autorisées (80-80, 40-40, 40-20, 20-40, 20-20). Le procédé de codage selon l'invention prend en compte cette réduction du nombre de combinaisons possibles, le mode 40 ms n'utilisant la compensation de mouvement qu'une trame sur deux. L'information à coder par blocs 16x16 est celle du mode obtenu avec le vecteur éventuellement associé avec un débit maximal de 1 Mbit/s.

Les paramètres de définition de l'arbre de codage sont alors :
- taille des blocs élémentaires : 16x16 pixels
- amplitude des vecteurs : ± 6 pixels
- macrobloc choisi de taille : 128x128 pixels
- taille des images HD : 1440x1152 pixels
- débit maximal autorisé : 1 Mbit/s
- information codée toutes les 80 ms par bloc 16x16.

Le nombre de combinaisons est défini pour chaque combinaison du mode comme suit :

80-80 → 1 combinaison
40-40 → $N_1 x N_2$ combinaisons
40-20 → $N_1$ combinaisons
20-40 → $N_2$ combinaisons
20-20 → 1 combinaison

où $N_1$ désigne le nombre de vecteurs dans la première image par bloc de 128x128 pixels,
et $N_2$ désigne le nombre de vecteurs dans la deuxième image par bloc de 128x128 pixels.

Pour $N_{1max} = N_{2max} = 64$

le nombre de possibilités maximales (incluant un noeud) est égal à

$3 + N_1 + N_2 + N_1.N_2 = 4227$ et peut être codé par mots de code de 13 bits.

Comme dans la norme HDMAC seuls 1408 points/ligne et 1152 lignes sont transmis le nombre de macroblocs de taille 128x128 à considérer est égal à 99.

En retournant aux figures 2, 3 et 4 le mot de début DEB de chaque macrobloc contient dans ces conditions pour chaque image 1 et 2 successive :

$N_1$ vecteurs de l'image 1 ($N_1$ compris entre 0 et 64)

$N_2$ vecteurs de l'image 2 ($N_2$ compris entre 0 et 64)

N vecteurs différents dans les images 1 et 2

(N étant égal au maximum de la somme des $N_1$ plus $N_2$ vecteurs).

et n mots de codes (n compris entre 1 et 64).

Soit un maximum total de $N_1$ x $N_2$ x N x n = 34881600 combinaisons possibles représentables par un mot de code DEB de 26 bits. (Ces informations étant nécessaires au décodage pour retrouver les mots de code parmi le flux binaire).

Les vecteurs d'amplitude ± 6 pixels nécessitent 8 bits pour être codés. Le débit binaire maximal théorique est égal dans ces conditions au produit du nombre de macroblocs transmis (99) par la somme des bits composant le mot DEB (26), des bits composant le menu de vecteur (2x64x8), et des bits de mots de code (64x13) le résultat du produit obtenu étant à nouveau multiplié par la fréquence 12,5 Hz correspondant à une transmission de ce paquet de bits toutes les 80 ms.

Dans l'application HDMAC considérée le débit qui en résulte est de 2328975 bits/s. Pour entrer dans le débit de 1 M bit/s le nombre de vecteurs doit être limité à 13 par macrobloc (sur les 64 possibles). Le débit obtenu est alors de

$$99x[19 + (13x2x8) + (64x8)]x12,5 = 914513 \text{ bits/s}$$

En considérant non plus des vecteurs d'amplitude ± 6 pixels mais des vecteurs de ± 14 dans la direction horizontale de l'image et de ± 8 dans la direction verticale, le débit maximal devient

$$99x[19 + (13x2x9) + (64x8)]x12,5 = 946687,5 \text{ bits/s.}$$

Naturellement au lieu de choisir de limiter comme précédemment le nombre de vecteurs à 13 sur toutes les images il est encore possible d'opérer cette limitation de façon dynamique, en transmettant par exemple tous les vecteurs possibles si le débit est inférieur à 1 M bit/s et en limitant par contre le nombre de vecteurs jusqu'à ce que le débit soit inférieur à 1 M bit/s. La limitation à 13 des vecteurs peut s'obtenir en prenant que les 13 les plus occurents par macrobloc et en assignant le plus proche vecteur parmi les 13, aux vecteurs supprimés.

D'autre part la taille normal des blocs qui est 16x16 dans le codage HDMAC peut éventuellement être réduite car le procédé de l'invention peut toujours être appliqué indépendamment de la taille des blocs plus grande ou plus petite choisie.

Afin de réduire le débit, il est préférable de non plus coder un noeud comme un "vecteur" spécifique (afin de reconstruire l'arbre au décodage) mais de transmettre un champ "ARBRE" tel que représenté à la figure 5, qui représente l'arbre de code. Chaque bit de ce champ indique un noeud ou une feuille, le premier bit indique l'état de la racine (bloc de taille nxn, feuille ou noeud), le deuxième, le troisième, le quatrième et le cinquième l'état des 4 sous-blocs de taille n/2,xn/2, etc... jusqu'à l'avant dernier niveau possible. Ainsi pour les figures 1A, 1B, 1C, le mot "ARBRE" serait :

1 0111 0000 0011 0000 0110

avec

1 - R

0111 - $F_1 N_1 N_2 N_3$

0000 - sous-blocs de $F_1$

0011 - $F_1 F_3 N_4 N_5$

0000 - $F_4 F_5 F_6 F_7$

0110 - $F_8 N_6 N_7 F_9$

et

1 = noeud

0 = feuille.

Les mots de code ($MC_i$) ne représentent plus qu'une des combinaisons mode/vecteur.

Ainsi pour l'application HDMAC, on a quatre niveaux (128, 64, 32, 16) le mot "ARBRE" est donc un 21 bits.

Le gain en débit est obtenu par le fait que précédemment un noeud était codé avec autant de bit qu'un vecteur (soit 8 bits maximum). En supposant que l'on ait seulement 5 noeuds (sur les 21 possibles), il faudrait 8x5 = 40 bits pour l'arbre. Avec la présente méthode seulement 21 sont nécessaires. Au maximum cette méthode peut donner un gain de :

$$[21(\text{nombre de noeuds})\text{x}8] - [21] = 147 \text{ bits par macrobloc}$$

avec 8 bits par mot de code soit 147x99x12,5=181912, 5 bits/s

De plus avec le codage séparé de l'arbre, le cas représenté par la figure 3 peut être utilisé pour le cas où l'arbre est complètement décomposé. On garantit ainsi le même débit maximum que précédemment (le mot "ARBRE" n'est pas transmis).

## Revendications

1. Procédé de codage à paramètres ajustables d'un champ de mouvement dans une séquence d'images animées caractérisé en ce qu'il consiste à décomposer chaque champ de mouvement de l'image suivant un arbre de codage réalisé par des étapes successives de découpage de l'image en blocs de dimension déterminée, chaque bloc d'image obtenu étant à nouveau découpé jusqu'à l'obtention d'un bloc homogène, c'est à dire une zone d'image à mouvement uniforme et à identifier, à partir d'un menu de vecteurs ($Vect_i$) contenant la valeur des vecteurs mouvement ($Vect_i$) présents dans l'image et de mots de code ($MC_i$) donnant l'adresse de ces vecteurs dans les menus, les vecteurs ($Vect_i$) correspondant à ces zones homogènes.

2. Procédé selon la revendication 1, caractérisé en ce que la décomposition de chaque champ de mouvement a lieu à l'intérieur de blocs (nxn) de dimension déterminée de l'image.

3. Procédé selon la revendication 2, caractérisé en ce que la taille des blocs est ajustable.

4. Procédé selon la revendication 3, caractérisé en ce qu'il consiste à ajuster la longueur des vecteurs mouvements.

5. Procédé selon l'une quelconque des revendications 1 à 4, caractérisé en ce qu'il consiste à découper l'image en macroblocs de dimension déterminée et à calculer un arbre de codage sur chacun des macroblocs de façon à obtenir plusieurs menus de vecteurs par image.

6. Procédé selon l'une quelconque des revendications 1 à 5, caractérisé en ce que la décomposition en arbre de codage a lieu sur deux images successives.

7. Procédé selon la revendication 1 à 6, caractérisé en ce qu'il consiste à limiter le nombre de vecteurs en supprimant les vecteurs les moins occurents.

8. Procédé selon la revendication 1, caractérisé en ce que l'arbre peut être décrit soit comme un vecteur spécifique, soit transmis séparément.

9. Procédé selon la revendication 1 ou 5, caractérisé en ce qu'il consiste à ajuster le nombre de bits d'adresse des vecteurs mouvement ($Vect_i$) en fonction du nombre de vecteurs mouvement ($Vect_i$) dans le menu.

## Patentansprüche

1. Verfahren zur Kodierung eines Bewegungsfelds in einer Folge bewegter Bilder mit justierbaren Parametern, dadurch gekennzeichnet, daß es darin besteht, jedes Bewegungsfeld des Bilds gemäß einem Kodierbaum zu zerlegen, der in aufeinanderfolgenden Schritten der Zerlegung des Bilds in Blöcke bestimmter Abmessung erstellt wurde, wobei jeder erhaltene Bildblock erneut zerlegt wird, bis ein homogener Block erhalten wird, d.h. eine Bildzone mit gleichförmiger Bewegung, und dann, ausgehend von einem Menü von Vektoren (Vec-$t_i$), das den Wert der im Bild vorliegenden Bewegungsvektoren (Vect$_i$) und von Kodewörtern (MC$_i$) enthält, die die Adresse dieser Vektoren in den Menüs angeben, die Vektoren (Vect$_i$) entsprechend diesen homogenen Zonen zu identifizieren.

2. Verfahren nach Anspruch 1, dadurch gekennzeichnet, daß die Zerlegung jedes Bewegungsfelds innerhalb von Bildblöcken (n·n Bildpunkte) vorbestimmter Abmessungen stattfindet.

3. Verfahren nach Anspruch 2, dadurch gekennzeichnet, daß die Größe der Blöcke einstellbar ist.

4. Verfahren nach Anspruch 3, dadurch gekennzeichnet, daß die Länge der Bewegungsvektoren eingestellt wird.

5. Verfahren nach einem beliebigen der Ansprüche 1 bis 4, dadurch gekennzeichnet, daß es darin besteht, das Bild in Makroblöcke bestimmter Abmessung zu zerlegen und einen Kodierbaum für jeden dieser Makroblöcke so zu berechnen, daß mehrere Vektormenüs je Bild erhalten werden.

6. Verfahren nach einem beliebigen der Ansprüche 1 bis 5, dadurch gekennzeichnet, daß die Zerlegung in einen Kodierbaum über zwei aufeinanderfolgende Bilder stattfindet.

7. Verfahren nach einem der Ansprüche 1 bis 6, dadurch gekennzeichnet, daß es darin besteht, die Anzahl von Vektoren zu begrenzen, indem die am wenigsten oft vorkommenden Vektoren entfallen.

8. Verfahren nach Anspruch 1, dadurch gekennzeichnet, daß der Kodierbaum als ein spezieller Vektor beschrieben oder getrennt übertragen werden kann.

9. Verfahren nach Anspruch 1 oder 5, dadurch gekennzeichnet, daß es darin besteht, die Anzahl von Adressbits der Bewegungsvektoren (Vect$_i$) abhängig von der Anzahl von Bewegungsvektoren (Vect$_i$) im Menü festzulegen.

## Claims

1. Method of coding with adjustable parameters of a field of movement in a sequence of animated images characterized in that it consists in decomposing each field of movement of the image according to a coding tree produced by successive steps of dividing the image into blocks of defined dimension, each image block obtained being again divided until a homogenous block is obtained, that is to say an image region having uniform movement, and in identifying the vectors (Vect$_i$) corresponding to these homogenous regions, from a menu of vectors (Vect$_i$) containing the value of the movement vectors (Vect$_i$) present in the image and of code words (MC$_i$) giving the address of these vectors in the menus.

2. Method according to Claim 1 characterized in that the decomposition of each field of movement takes place inside blocks (nxn) of defined dimension of the image.

3. Method according to Claim 2 characterized in that the size of the blocks is adjustable.

4. Method according to Claim 3 characterized in that it consists in adjusting the length of the movement vectors.

5. Method according to any one of Claims 1 to 4 characterized in that it consists in dividing the image into macroblocks of defined dimension and in calculating a coding tree on each of the blocks in such a way as to obtain several menus of vectors per image.

6.  Method according to any one of Claims 1 to 5 characterized in that the decomposition into a coding tree takes place on two successive images.

7.  Method according to Claims 1 to 6 characterized in that it consists in limiting the number of vectors by suppressing the least-prevalent vectors.

8.  Method according to Claim 1 characterized in that the tree can be described either as a specific vector, or transmitted separately.

9.  Method according to Claim 1 or 5, characterized in that it consists in adjusting the number of address bits of the movement vectors ($Vect_i$) on the basis of the number of movement vectors ($Vect_i$) in the menu.

FIG.1A

FIG.1B

NIVEAU 1
(Blocs 8×8)

NIVEAU 2
(Blocs 4×4)

NIVEAU 3
(Blocs 2×2)

NIVEAU 4
(Pixel)

● noeud
■□ feuille

FIG.1C

# FIG.2

menu de vecteur                mot de code

| Deb | VECT$_1$ | ..... | VECT$_M$ | MC$_1$ .......... MC$_m$ |

# FIG.3

| Deb | VECT$_1$ | ...... | VECT$_M$ | MC$_1$ ........... MC$_{n \times n}$ |

# FIG.4

N

N$_1$

N$_2$

VECT$_1$ ........... VECT$_j$ ... VECT$_n$ ......... VECT$_m$

# FIG.5

| Deb | ARBRE | VECT$_1$ | ...... | VECT$_M$ | MC$_1$ ........... MC$_n$ |